# FASCICULE DE BREVET EUROPEEN

(11) **EP 3 068 692 B1**
(45) Date de publication et mention de la délivrance du brevet: **01.03.2017**
(21) Numéro de dépôt: 14809931.0
(22) Date de dépôt: 14.11.2014
(51) Int. Cl.: B64D 33/02

(54) **DISPOSITIF DE DÉGIVRAGE D'ENTRÉE D'AIR DE NACELLE D'UN MOTEUR D'AÉRONEF, PROCÉDÉ DE FABRICATION D'UN TEL DISPOSITIF DE DÉGIVRAGE ET NACELLE DE MOTEUR D'AÉRONEF EQUIPÉ D'UN TEL DISPOSITIF DE DÉGIVRAGE**
ENTEISUNGSVORRICHTUNG FÜR GONDELLUFTEINLASSSTRUKTUR EINES FLUGZEUGS, HERSTELLUNGSVERFAHREN EINER SOLCHEN ENTEISUNGSVORRICHTUNGS UND GONDEL BEINHALTEND EINE SOLCHE ENTEISUNGSVORRICHTUNG
DE-ICING DEVICE FOR AN AIR INTAKE OF NACELLE OF AN AIRCRAFT ENGINE, METHOD OF MAKING SUCH A DE-ICING DEVICE AND NACELLE OF AIRCRAFT ENGINE EQUIPPED WITH SUCH A DE-ICING DEVICE

(30) Priorité: 15.11.2013 FR 1361221
(43) Date de publication de la demande: 21.09.2016
(73) Titulaire: Safran Nacelles, 76700 Gonfreville-l'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2014/052914
(87) Numéro de publication internationale: WO 2015/071609

(56) Documents cités:
- EP-A1- 1 318 283
- EP-A2- 0 376 371
- EP-A2- 2 607 655
- US-A- 5 088 277
- US-A1- 2011 133 025

## Description

La présente invention concerne un dispositif de dégivrage d'entrée d'air de nacelle d'un moteur d'aéronef. Elle concerne aussi un procédé de fabrication d'un tel dispositif de dégivrage ainsi qu'une nacelle de moteur d'aéronef équipé d'un tel dispositif de dégivrage.

Dans l'état de la technique, on a déjà résolu le problème technique soulevé par la formation de givre sur l'entrée d'air d'une nacelle d'un moteur d'aéronef. Le problème technique est soulevé par la présence d'un bord d'attaque de l'aéronef placé dans une veine d'air humide de sorte que la pression produite par la pénétration du bord d'attaque dans la veine d'air induit le dépôt de givre qui encombre progressivement le bord d'attaque.

Une solution a notamment été décrite pour le dégivrage d'un bord d'attaque qu'il soit un bord d'aile ou d'empennage d'aéronef ou une lèvre d'entrée d'air de nacelle, mais dont l'intérieur est garni d'un matériau ou structure alvéolaire de réduction du bruit acoustique dans le document FR-A-2.912.781. Dans ce document, il est décrit un revêtement pour le traitement acoustique rapporté au niveau d'une surface d'un aéronef, notamment au niveau d'un bord d'attaque tel qu'une entrée d'air d'une nacelle d'aéronef. Le revêtement comporte une couche acoustiquement résistive, au moins une structure alvéolaire et une couche réflectrice. La structure alvéolaire comporte une pluralité de conduits débouchant d'une part au niveau d'une première surface imaginaire, et d'autre part, au niveau d'une seconde surface imaginaire.

Dans cet état de la technique, la structure alvéolaire comprend des découpes ou des orifices ménagés au niveau des parois latérales de certains conduits permettant de faire communiquer des conduits adjacents de manière à créer un réseau de conduits communicants isolants au moins un conduit ou un groupe de conduits non communicants, au moins un des conduits communicants étant relié à au moins une arrivée de gaz chaud.

La réalisation des découpes et orifices dans les parois des alvéoles est délicate. Elle est coûteuse en temps d'usinage et elle ne permet pas la réalisation de structures alvéolaires de grandes dimensions. Par ailleurs, la distribution d'air chaud dans la structure alvéolaire n'est pas optimale ce qui conduit à augmenter la pression de distribution de l'air chaud et n'est pas toujours réalisable.

Dans un autre état de la technique (voir FR-A-2.981.049), le perçage de découpes ou orifices dans les parois des alvéoles pour constituer des conduits est remplacé par le rainurage de la face du matériau absorbant acoustique destinée à venir se poser sur la surface intérieure de la peau de la nacelle qui fait face, au niveau de l'entrée d'air de la nacelle et vers l'intérieur de la nacelle face aux aubes de la soufflante dans le cas d'un turboréacteur. Cette peau est elle-même percée de perforations ou de microperforations qui sont en communication fluidique avec les rainures ainsi constituées. Dans cet état de la technique, un tube piccolo de forme annulaire est alimenté en air chaud par une conduite provenant d'un générateur ou d'une source d'air chaud, lorsqu'une opération de dégivrage est commandée. L'air chaud diffuse à travers le tube piccolo, lui-même perforé, et pénètre dans les rainures de la face intérieure de la structure alvéolaire, il peut ensuite diffuser à travers les perforations ou microperforations de la peau intérieure de l'entrée d'air de la nacelle. L'effet de dégivrage est ainsi produit sur l'entrée d'air de la nacelle.

Dans cet autre état de la technique, le rainurage est une amélioration pour le travail de la structure alvéolaire. Mais il n'est pas particulièrement adapté à la distribution primaire de l'air chaud par le tube piccolo.

Autres dispositifs de dégivrage sont divulgués dans les documents US 2011/0133025, EP 2607655, EP 0376371 ou US 5088277.

La présente invention apporte une solution aux inconvénients de l'état de la technique. En effet, la présente invention concerne un dispositif de dégivrage pour une entrée d'air d'une nacelle de moteur d'aéronef. Le dispositif de dégivrage est du genre comportant un générateur ou une source d'air chaud connecté par au moins un conduit à un tube piccolo disposé en relation avec le volume intérieur d'une lèvre avant de la nacelle, la lèvre avant étant munie de perforations pour l'écoulement de l'air chaud de dégivrage. Au moins une structure alvéolaire de réduction de bruit est disposée sur au moins une partie de la peau perforée de la lèvre d'entrée. La structure alvéolaire est du genre présentant une pluralité de conduits de circulation de l'air chaud diffusé par le tube piccolo.

Selon la caractéristique principale de l'invention, le tube piccolo présente un profil annulaire intégré à une cloison de limitation du volume intérieur de la lèvre d'entrée et doté d'une pluralité de perforations pour réaliser la diffusion de l'air chaud amené par un ou plusieurs conduits depuis le générateur ou la source d'air chaud à travers la dite cloison de limitation et en ce que la structure alvéolaire est au moins partiellement disposée entre une partie du tube piccolo et une partie en regard de la face intérieure de la peau de limitation de la lèvre d'entrée d'air.

Selon des caractéristiques additionnelles :
le profil du tube piccolo est déterminé en fonction de la forme de la lèvre avant et/ou de la cloison de limitation de façon à optimiser l'efficacité du dégivrage ;
une partie du tube piccolo sert de peau de limitation de la structure alvéolaire de réduction de bruit ;
le tube piccolo est alimenté en air chaud de dégivrage par au moins un conduit d'air chaud connecté à travers une ouverture de la cloison de limitation au générateur ou à la source d'air chaud de dégivrage ;
le générateur ou la source d'air chaud de dégivrage est disposé dans une zone de la nacelle en arrière d'une cloison intermédiaire en arrière de la cloison avant sur laquelle est intégré le tube piccolo et en ce que le conduit traverse des ouvertures de ladite cloison avant et de ladite cloison intermédiaire ;
les canaux de circulation d'air chaud pratiqués dans la structure alvéolaire sont réalisés sur une partie au moins de la hauteur des alvéoles et débouchent sur un collecteur disposé du côté de la peau intérieure de la lèvre avant et à l'arrière de la structure alvéolaire et qui est connecté par au moins un tube de sortie débouchant sur une ouverture de la face extérieure de la lèvre avant et en ce que les canaux sont disposés dans des zones de la structure alvéolaire qui ne sont pas munies de perforations acoustiques, mais dégagent des points d'injection d'air de dégivrage sur les peaux intérieure et/ou extérieure de la structure alvéolaire.

L'invention concerne aussi un procédé de fabrication d'un dispositif de dégivrage pour section d'entrée d'air d'une nacelle de moteur d'aéronef. Le procédé principalement consiste au moins à former une lèvre avant annulaire dotée de perforations nécessaires au traitement acoustique de la lèvre, à disposer une structure alvéolaire de réduction de bruit dotée de canaux de circulation de l'air chaud de dégivrage débouchant dans un collecteur d'air chaud excédentaire, à former un tube piccolo annulaire, percé de perforations de diffusion de l'air chaud de dégivrage fourni par un conduit d'air chaud provenant d'un générateur ou d'une source d'air chaud de dégivrage, le tube piccolo présentant un profil adapté à la forme de la lèvre avant et à la face extérieure de ladite structure alvéolaire, à fixer le tube piccolo par son bord intérieur à la face intérieure en regard de la lèvre avant, à former une cloison avant pour fermer le volume intérieur de la lèvre avant en partant du tube piccolo et à la fixer d'une part par ses bords extérieur et intérieur par rivetage à la face en regard de la lèvre avant, et d'autre part aux bords adaptés en regard du tube piccolo.

Selon une caractéristique additionnelle, le procédé de fabrication consiste à former les canaux de circulation d'air de dégivrage et/ou le collecteur d'air chaud excédentaire dans lequel les canaux débouchent dans la structure alvéolaire par usinage au moins partiel de groupes d'alvéoles ou encore par collage partiel des feuilles empilées de réalisation des alvéoles de façon à, par expansion de l'empilement de feuilles réaliser au moins un canal de passage d'air de largeur déterminée.

L'invention concerne enfin une nacelle de moteur d'aéronef. La nacelle comporte un dispositif de dégivrage pour sa section d'entrée d'air fabriqué selon le procédé de l'invention, et défini selon l'invention.

D'autres caractéristiques et avantages de la présente invention seront mieux compris à l'aide de la description et des dessins, parmi lesquels :
- La figure 1 représente un dispositif de dégivrage selon l'état de la technique ;
- La figure 2 représente un dispositif de dégivrage selon un mode de réalisation de l'invention ;
- La figure 3 représente un schéma expliquant le mode de fonctionnement du dispositif de dégivrage de la figure 2 :
- La figure 4 représente un détail d'un autre dispositif de dégivrage selon un mode de réalisation de l'invention ;
- Les figures 5a à 5c représentent trois étapes dans un procédé de fabrication d'un dispositif de dégivrage selon l'invention ;
- Les figures 6 et 7 représentent deux vues d'un premier mode de réalisation d'une structure alvéolaire utilisée dans le dispositif de dégivrage de l'invention ;
- La figure 8 représente un deuxième mode de réalisation d'une structure alvéolaire utilisée dans le dispositif de dégivrage de l'invention ; et
- Les figures 9 à 11 représentent trois vues d'un troisième mode de réalisation d'une structure alvéolaire utilisée dans le dispositif de dégivrage de l'invention.

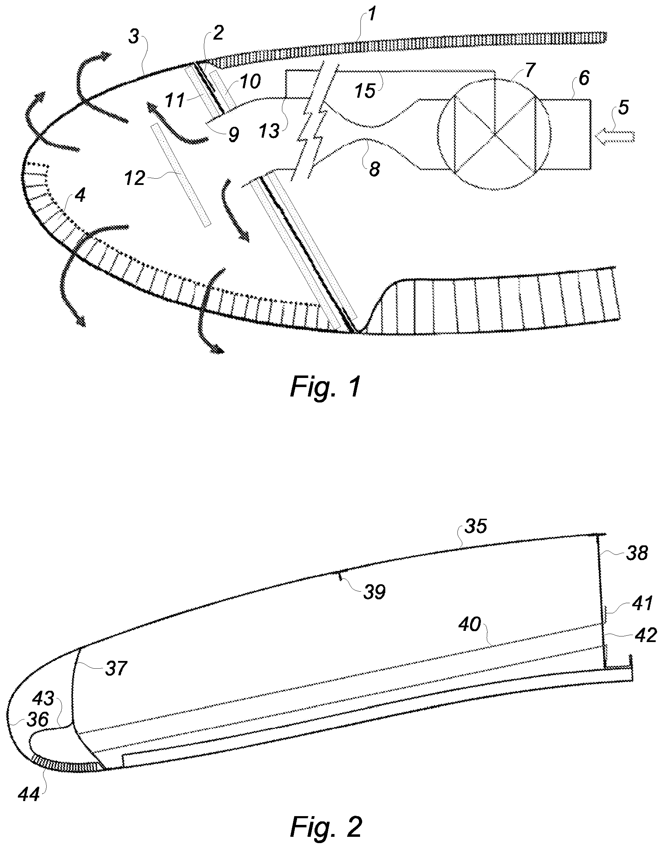

A la figure 1, on a représenté un dispositif de dégivrage selon l'état de la technique. On a représenté une section de la partie avant, celle qui entre d'abord dans la veine d'air, de la nacelle du moteur d'aéronef.

Dans la suite, du fait qu'on a représenté seulement une section de la section d'entrée d'air de la nacelle, en position supérieure, on écrira que la section d'entrée est dirigée vers l'avant de la nacelle. La section représentée est une section supérieure relativement à un axe de symétrie ou axe longitudinal de la nacelle, autour duquel la section représentée tourne pour générer les diverses formes annulaires décrites. Les indications de « supérieur » ou « d'inférieur » font référence à des parties représentées sur la seule section représentée en position haute, soit respectivement à la face « extérieure » et « intérieure » de la section d'entrée.

La nacelle présente une symétrie axiale autour d'un axe central disposé (et non représenté) sous la face inférieure au dessin de la section d'entrée dessinée. La section d'entrée de la nacelle entoure la soufflante d'un turboréacteur (non représenté) ou tout autre disposition d'entrée d'un moteur d'aéronef. Elle joue un rôle essentiel dans l'approvisionnement en air du moteur d'aéronef, de sorte que, ainsi qu'il a été indiqué plus haut, la formation de givre a tendance à réduire la surface d'entrée d'air, ce qui restreint le débit d'air et partant la puissance du moteur.

La section d'entrée d'air de la nacelle comporte un capot extérieur 1 qui se raccorde à une lèvre avant 3 en forme de « C » qui se raccorde elle-même sur la partie inférieure du dessin à une peau intérieure (non référencée) de la nacelle qui, dans le cas d'un turboréacteur, fait face à la soufflante. Le capot extérieur 1, la lèvre avant 3 et la peau intérieure sont dotés au moins partiellement de structures alvéolaires, comme la structure alvéolaire 4 qui est disposée sur la face intérieure de la lèvre avant 3, dans sa partie inférieure au dessin, face à l'axe longitudinal de la nacelle.

Une cloison avant 2 est disposée entre la partie extérieure de la lèvre avant 3 et la partie intérieure de la lèvre avant 3, sensiblement à leurs raccordement respectifs avec le capot extérieur 1 d'une part et la peau intérieure non référencée à la partie intérieure de la section d'entrée de la nacelle. La cloison avant 2 présente un perçage à travers lequel est montée l'ouverture 9 d'un conduit d'air chaud de dégivrage. Deux panneaux thermiques 10 et 11 sont disposés de part et d'autre de la cloison avant 2 de façon à assurer un isolement thermique de l'air chaud soufflé relativement au matériau de la cloison avant 2.

Un troisième panneau thermique 12 est fixé par des moyens convenables (non représentés) en face de l'ouverture 9 du conduit d'air chaud de dégivrage, à l'intérieur du volume limité par la lèvre avant 3 et la cloison avant 2. Le montage du troisième panneau thermique et son profil sont calculés de manière à assurer une diffusion déterminée de l'air chaud de dégivrage dans tout le volume limité par la lèvre avant 3 et la cloison avant 2. L'air chaud soufflé est expulsé vers l'extérieur par des perforations et des microperforations pratiquées sur la peau de la lèvre avant 3 et sur la structure alvéolaire 4 de sorte que l'air chaud de dégivrage s'expulse selon les flèches représentées au dessin.

L'air chaud délivré par l'ouverture 9 de la conduite d'air chaud est délivré par un générateur d'air chaud 6-9 disposé en aval de la cloison avant 2 et qui est alimenté en air chaud primaire par une source d'air chaud comme l'air circulant au voisinage du moteur d'aéronef proprement dit ou extrait d'un compresseur du moteur. Cet air primaire chaud 5 est prélevé par des moyens connus et collecté dans une conduite d'entrée d'air chaud primaire 6 pour entrer sur un régulateur d'air chaud 7, dont une tubulure de sortie présente un ajutage 8 qui limite le débit d'air chaud reconditionné à destination de l'ouverture 9 de la conduite d'air chaud connectée au volume intérieur de la lèvre avant 2.

Préférentiellement, une boucle de contrôle est installée pour commander le régulateur qui peut être composé d'au moins une électrovanne à débit contrôlé. L'électrovanne servant de régulateur 7 est commandée d'une part par un signal de commande de dégivrage (non représenté), produit par un organe de commande disposé au niveau du poste de pilotage de l'aéronef et/ou par un organe de sécurité détectant l'apparition de givre dans la section d'entrée de la nacelle, et d'autre part, par un signal 15 d'ouverture variable de l'électrovanne 6 produit par un capteur de pression 13 disposé au voisinage de l'ouverture 9 de la conduite d'air chaud.

Pour remédier aux inconvénients décrits plus haut et d'autres encore, la présente invention propose plusieurs dispositions avantageuses. Tout d'abord, dans un premier mode de réalisation, représenté à l'aide de la figure 2, le générateur d'air chaud décrit dans l'état de la technique (voir Figure 1) est reculé en arrière de la nacelle au-delà de la cloison avant 37 et d'une cloison intermédiaire 38. Une telle disposition reculée permet de réduire l'encombrement du volume annulaire intérieur de la nacelle en une zone importante et de plus, rapproche le générateur d'air chaud d'une zone de la nacelle plus facilement accessible en maintenance.

A cette fin, le conduit d'air chaud 40 est porté entre la cloison avant 37 montée sur l'arrière de la lèvre avant 36 et la cloison intermédiaire 38 montée entre le capot 35 et la peau intérieure de nacelle. La cloison avant 37 est une cloison de limitation du volume intérieur de la lèvre avant 36 dans lequel l'air chaud de dégivrage sera diffusé. Le conduit d'air chaud 40 est monté par ses deux extrémités sur des ouvertures correspondantes des cloisons avant 37 et intermédiaire 38. Sur la cloison 38, l'ouverture 42 du conduit d'air chaud 40 est dotée d'une collerette 41 d'appui et d'étanchéité.

L'extrémité avant (à gauche au dessin) du conduit d'air chaud 40 traverse la cloison avant 37 et débite à travers un tube piccolo 43 disposé dans la partie basse (la plus proche de l'axe longitudinal de nacelle - non représenté) du volume intérieur de la lèvre avant 36. Le tube piccolo 43 est doté de perforations dont le nombre, la répartition et la section sont déterminés par construction. La section du tube piccolo est adaptée en fonction des caractéristiques thermodynamiques comprenant les débits, les pressions du flux d'air chaud diffusé à travers le tube piccolo et de la géométrie intérieure de la lèvre avant afin de produire un profil déterminé de débits d'air chaud au niveau des perforations et microperforations (non référencées) pratiquées à travers la lèvre avant 36.

Un tel profil déterminé de pressions et de débits d'air chaud est prévu de manière à rendre optimal l'effet de dégivrage au niveau de la section d'entrée de la nacelle.

Dans le mode de réalisation exemplifié à l'aide de la figure 2, la section du tube piccolo 43 reproduit sensiblement le profil intérieur de la cloison avant 37 ainsi qu'il sera détaillé plus loin.

Dans un mode de réalisation, la face intérieure de la lèvre avant 36 est revêtue d'une structure alvéolaire 44 de réduction de bruit. Comme dans l'état de la technique décrit à l'aide de la figure 1, la structure alvéolaire 44 est disposée sur la partie intérieure, du côté de l'axe longitudinal de la nacelle (non représenté) de la section d'entrée de la nacelle. La structure alvéolaire présente ainsi une peau inférieure au dessin en contact avec la surface intérieure de la lèvre avant 36 et une peu supérieure en contact avec la surface inférieure du tube piccolo 43. Il est prévu que la surface inférieure du tube piccolo 43 serve de peau supérieure à la structure alvéolaire 44 de réduction de bruit.

La peau supérieure de la structure alvéolaire 44 de réduction de bruit est elle-même dotée de perforations permettant le passage de flux d'air chaud issu du tube piccolo. D'autres dispositions seront détaillées plus loin.

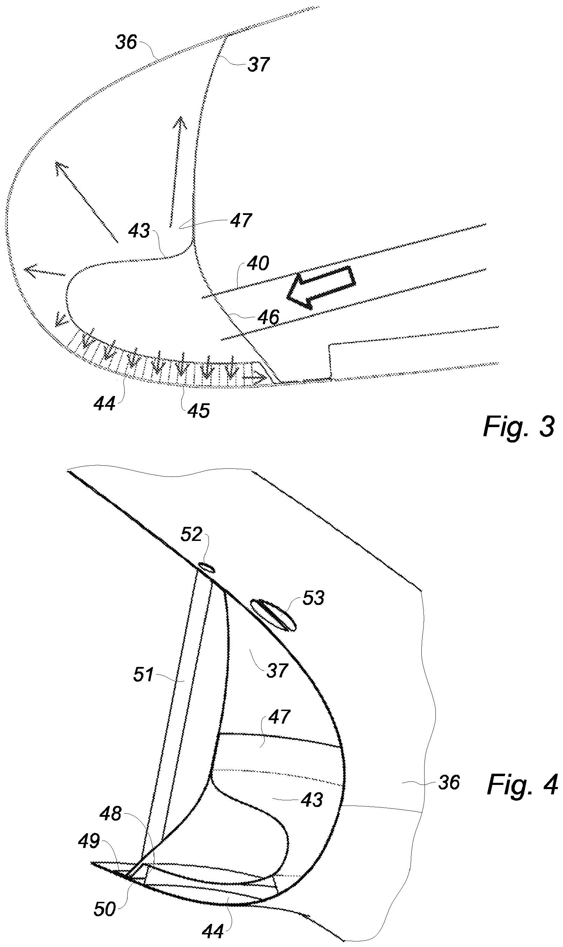

A la figure 3, on a représenté la disposition de la figure 2 pour expliquer son fonctionnement. Le tube piccolo 43 est formé à partir d'une feuille métallique, de préférence en aluminium, titane ou alliage de nickel en fonction de la température maximale de l'air de dégivrage. Elle présente une partie supérieure 47 qui vient en raccordement avec la surface en regard de la cloison avant 37. La partie inférieure de la tôle, ou feuille, formant le tube piccolo 43 vient ensuite parallèlement à la structure alvéolaire 44 de réduction de bruit solidaire de la face intérieure de la partie inférieure de la lèvre avant 36. L'air chaud provenant du conduit d'air chaud 40 passe par une ouverture 46 pratiquée dans la cloison avant 37, emplit le volume intérieur du tube piccolo 43 et diffuse à travers des perforations selon les flèches indiquées à la figure 3 à travers les alvéoles 45 de la structure alvéolaire 44.

Dans un autre mode de réalisation, l'air chaud est évacué de la structure alvéolaire 44 par les perforations (non représentées) de la lèvre 36.

On comprend de ce qui précède que le tube piccolo 43 forme un anneau disposé contre et intégré à la cloison avant 37 à l'intérieur du volume de la lèvre avant 36, autour de l'axe longitudinal de la nacelle (non représenté dans la section présentée aux dessins). De même, un seul conduit 40 d'air chaud est représenté. Plusieurs conduits analogues au conduit 40 peuvent être disposés en fonction des besoins autour de l'axe longitudinal de la nacelle de façon à fournir un approvisionnement satisfaisant en air chaud.

A la figure 4, on a représenté un autre mode de réalisation du dispositif de dégivrage selon l'invention. La vue est celle d'une section partiellement vue dans l'espace de la partie supérieure de la nacelle, coupée sensiblement par un plan vertical passant par l'axe longitudinal de la nacelle (non représenté). Les mêmes éléments que ceux des figures 3 et 4 portent les mêmes numéros de référence.

La lèvre avant 36 a été représentée avec la cloison avant 37 et partiellement la structure alvéolaire 44. La partie arrière de la structure alvéolaire 44 comporte une chambre annulaire 50 vide qui sert de collecteur à l'air chaud insufflé depuis le tube piccolo 43 à travers la structure alvéolaire 44. Un tube collecteur 51 permet de rejeter à l'extérieur par un orifice 52 pratiqué sur la face supérieure de la lèvre avant 36 cet air chaud, auquel une extrémité haute du tube de sortie 51 est connecté.

L'autre extrémité, ou extrémité basse, du tube 51 est en communication à travers la cloison avant 37 et le pied ou bord inférieur 49 du tube piccolo 43 avec la chambre annulaire ou collecteur 50.

On a aussi représenté une perforation 53 sur la partie supérieure de la lèvre avant, composée de deux moitiés d'une même ouverture circulaire qui mettent en communication le volume intérieur de la lèvre avant avec l'air extérieur.

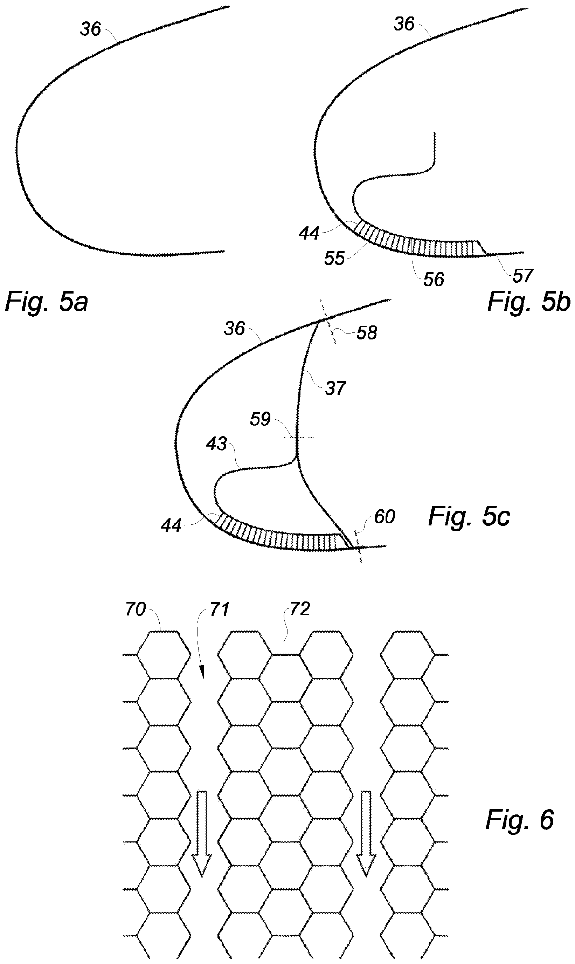

Aux figures 5a à 5c, on a représenté plusieurs étapes d'un procédé de fabrication d'un dispositif de dégivrage pour section d'entrée d'une nacelle de moteur d'aéronef selon l'invention.

A la figure 5a, on a représenté une étape initiale à partir de laquelle une lèvre avant 36 est formée. Pour simplifier, seule la section supérieure de la lèvre avant est représentée et la forme complète est obtenue sensiblement par rotation autour de l'axe longitudinal (non représenté) de la nacelle. La lèvre avant 36 est formée par tout moyen connu selon le matériau utilisé, et notamment par tournage ou emboutissage d'une tôle d'aluminium ou de titane.

A la figure 5b, on a représenté une étape ultérieure du procédé de fabrication à l'issue de laquelle la structure alvéolaire 44 a été brasée, ou soudée ou collée sur la face intérieure 55 de la lèvre avant 36. Puis, après formage du tube piccolo 43, ce dernier, doté de ses perforations est solidarisé de la peau supérieure 56 de la structure alvéolaire 44. Par ailleurs, le bord intérieur 57 du tube piccolo 43 est fixé à la face intérieure 55 de la lèvre avant 36.

Le formage du tube piccolo 43 peut être réalisé par différents procédés comprenant le tournage, l'emboutissage, la déformation superplastique et le formage à chaud.

A la figure 5c, on a représenté une étape ultérieure du procédé de fabrication de l'invention. Après formage de la cloison avant 37 ou cloison de limitation du volume intérieur de la lèvre avant 36, cette dernière est montée à l'intérieur de la lèvre avant 36 par l'arrière (à droite au dessin). Un rebord plié de la cloison avant 37 est ensuite riveté en 58 sur la peau supérieure de la lèvre avant 36. Le bord supérieur du tube piccolo 43 est ensuite riveté en 59 sur la cloison avant. Un rebord inférieur (au dessin) de la cloison avant 37 est riveté en 60 sur la peau inférieure de la lèvre avant 36 de sorte qu'l reste à monter les autres équipements du dispositif de dégivrage, notamment le ou les conduits d'air chaud et le générateur d'air chaud lorsque la lèvre avant 36 ainsi équipée est montée sur le reste de la nacelle.

A la figure 6, on a représenté un mode de réalisation d'une structure alvéolaire utilisable avec le tube piccolo de l'invention. La figure 6 représente une coupe des alvéoles de la structure alvéolaire 44 par un plan parallèle aux faces supérieure et inférieure de la structure quand elle est montée dans la lèvre avant, sur la section supérieure représentée aux figures précédentes.

De façon à réaliser un canal de passage de l'air chaud entre la peau supérieure (non représentée) en haut de la figure 6 et la peau inférieure (non représentée) en bas de la figure 6, une ou plusieurs rangées d'alvéoles hexagonales ont été au moins partiellement supprimées, par usinage total ou partiel. Il en résulte qu'un canal 71 est ainsi formé entre deux groupes 70 et 72 d'alvéoles qui ont été intégralement conservées. Les peaux supérieure et inférieure de la structure alvéolaire sont alors percées de perforations ou microperforations seulement au droit des canaux comme le canal 71 tandis qu'elles sont laissées intactes au niveau des alvéoles conservées. Cependant, la peau inférieure est traitée acoustiquement au droit des groupes d'alvéoles conservées par des microperforations adaptées. On note aussi que la peau supérieure de la structure alvéolaire est réalisée par une partie correspondante du tube piccolo 43 et que la peau inférieure de la structure alvéolaire 43 est réalisée par une partie de la peau inférieure 45 de la lèvre avant 36.

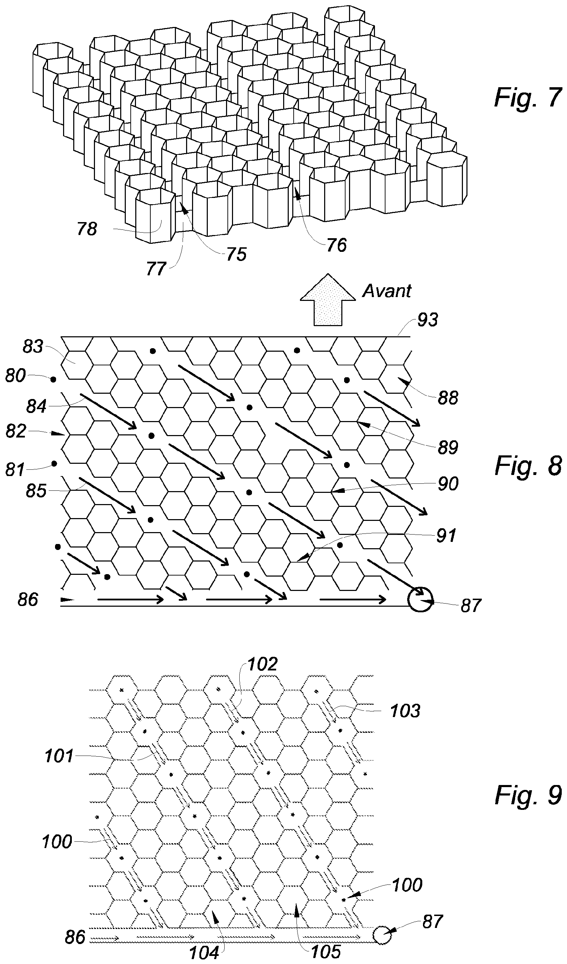

A la figure 7, on a représenté en perspective une plaque d'alvéoles coupée au niveau de la peau supérieure de sorte que les canaux 75 et 76 sont constitués par des alvéoles qui ont été partiellement usinées comme l'alvéole 77 comparée à l'alvéole voisine 78 qui a été conservée et sert de bord de limitation du canal 75. Plusieurs canaux de circulation d'air chaud sont constitués.

A la figure 8, on a représenté un autre mode de réalisation dans lequel les alvéoles usinées sont alignées pour former des canaux 84, 85 de circulation d'air chaud selon des diagonales. La flèche marquée « AVANT » désigne la direction du bord d'attaque de la lèvre avant quand la structure alvéolaire a été montée. Les points alignés au niveau des canaux 84, 85 de circulation d'air chaud comme les points 80 et 81 représentent les perforations pratiquées sur la peau externe et qui se trouvent donc en relation avec l'air chaud du tube piccolo. La densité et le diamètre des perforations 80, 81 sont déterminés de façon à varier selon la distance de la perforation au bord d'attaque pour ajuster les échanges thermiques en fonction des zones à dégivrer.

Les canaux 84, 85 de circulation d'air chaud insufflé par les perforations 80, 81 depuis le tube piccolo sont inclinés par rapport à la direction radiale quand la structure alvéolaire est installée dans la lèvre avant de la nacelle. Ils débouchent sur un collecteur de sortie 86, qui a été représenté notamment à la figure 4 sous la référence 50. Une extrémité du collecteur 86 débouche dans un tube de sortie 87 qui a été déjà décrit avec le tube 51 à la figure 4.

Les quatre canaux représentés à la figure 8 sont formés par usinage ou autrement en enlevant des alvéoles ou des parties d'alvéoles entre les groupes d'alvéoles limitant les canaux et portant les références 88 à 91.

A la figure 9, on a représenté un autre mode de réalisation de la structure alvéolaire dans lequel des canaux obliques de circulation d'air chaud sont percés par un autre moyen. Un collecteur 86 analogue au canal 86 de la figure 8 ou au collecteur 50 de la figure 4 est prévu avec le même tube 87 de sortie d'air chaud, analogue au tube de sortie 51 de la figure 4.

Des canaux 100 à 103 sont pratiqués lors de la fabrication des alvéoles. Ainsi qu'il est connu, les alvéoles sont d'abord produites à partir d'un empilement de feuilles métalliques qui portent des zones collées alternant de feuille en feuille dans l'empilement. Ainsi, une zone collée dans l'empilement n'est jamais superposée avec une autre zone collée immédiatement voisine. Puis, l'empilement subit une opération d'expansion de sorte que les zones collées restent plaquées deux à deux.

Pour réaliser un canal entre deux groupes d'alvéoles, l'invention prévoit de ne pas réaliser de collage entre deux feuilles de l'empilement préalable des feuilles métalliques de réalisation de la structure alvéolaire. La technique sera mieux comprise à l'aide des figures suivantes 10 et 11. Mais, on voit qu'il est ainsi possible de réaliser des canaux obliques comme les canaux 100 à 103 entre l'avant de la structure alvéolaire dirigée vers le bord d'attaque de la lèvre avant ou de la nacelle, mais aussi de réaliser des largeurs de canaux variable en fonction des débits d'air chaud que l'on veut ramener vers le collecteur 86 et le tube de sortie 87.

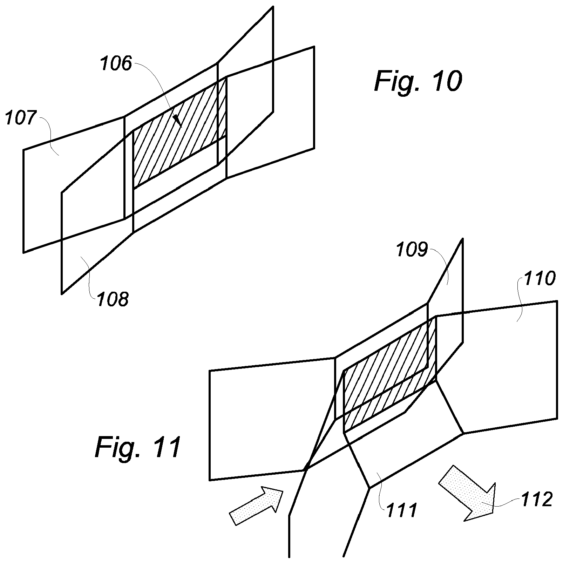

A la figure 10, on a représenté deux feuilles 107 et 108 de l'empilement de feuilles métalliques utilisée pour réaliser la structure alvéolaire. Une zone collée 106 entre les deux feuilles 107 et 108 est ménagée et une expansion de l'empilement est exécutée. Les ou rubans de part et d'autre de la zone collée 106 prennent alors une angulation, de sorte que le nid d'abeille de section hexagonal se forme. En répétant le motif composé d'une zone collée et d'une zone libre sur toute la longueur de l'empilement et en multipliant les feuilles de l'empilement avec un décalage du motif sur les différentes feuilles de l'empilement, on produit ainsi la partie classique en nid d'abeille de la structure alvéolaire de réduction de bruit.

A la figure 11, pour réaliser des canaux de circulation d'air chaud délivré par le tube piccolo de l'invention, on a représenté deux feuilles 109 et 110 dans l'empilement de feuilles métalliques dans une zone où on désire produire un conduit ou canal d'air chaud dans la structure alvéolaire. La zone collée représentée en hachure est interrompue, de sorte que lors de l'expansion représentée dans la direction de la flèche 112, il se forme un volet 111 qui ouvre le conduit ou canal entre les deux feuilles 109 et 110. Le degré d'ouverture du canal ou conduit, ainsi que la largeur du canal peuvent être adaptés en ménageant la longueur et/ou la largeur de la zone collée conservée.

Ainsi, on constate que les caractéristiques de l'invention permettent :
- une augmentation de l'efficacité d'échange entre l'air chaud issu du générateur d'air chaud et les surfaces givrées par rapport à la simple circulation d'air chaud prévue dans l'état de la technique, les sections de passage d'air pouvant être optimisées pour maximiser les échanges thermiques ;
- une réduction du débit d'air chaud pour une efficacité de dégivrage donnée par rapport à l'efficacité des dispositifs de dégivrage de l'état de la technique ;
- une réduction de masse des composants du dispositif de dégivrage de l'invention par intégration du tube piccolo à la structure alvéolaire dont il sert de peau supérieure ;
- une possibilité de dégivrer avec de l'air plus froid et un plus fort débit puisque le tube piccolo permet d'augmenter les échanges et donc de fonctionner avec des pressions et des températures plus faibles ;
- la réalisation de la lèvre avant, de la structure alvéolaire de réduction de bruit et/ou de la cloison avant en aluminium, ce qui conduit à une réduction des coûts par rapport à des solutions classiques en titane ;
- la structure alvéolaire de réduction de bruit peut aussi être collée sur la face intérieure de la lèvre avant au lieu d'être brasée, ce qui évite un échauffement lors de la fabrication.

## Revendications

1. Dispositif de dégivrage pour entrée d'air de nacelle de moteur d'aéronef, du genre comportant un générateur d'air chaud connecté par au moins un conduit à un tube piccolo disposé en relation avec le volume intérieur d'une lèvre avant de la nacelle, la lèvre avant étant munie de perforations pour l'écoulement de l'air chaud de dégivrage et au moins une structure alvéolaire de réduction de bruit disposée sur au moins une partie de la peau perforée de la lèvre d'entrée, la structure alvéolaire étant du genre présentant une pluralité de canaux de circulation de l'air chaud diffusé par le tube piccolo, le tube piccolo (43) présentant un profil annulaire intégré à une cloison de limitation (37) du volume intérieur de la lèvre avant (36), il étant doté d'une pluralité de perforations pour réaliser la diffusion de l'air chaud amené par un ou plusieurs conduits(40) depuis le générateur d'air chaud à travers la dite cloison de limitation (37), la structure alvéolaire (44) étant au moins partiellement disposée entre une partie du tube piccolo (43) et une partie (45) en regard de la face intérieure de la peau de limitation de la lèvre avant (36) **caractérisé en ce que** une partie du tube piccolo (43) sert de peau de limitation de la structure alvéolaire de réduction de bruit (44).

2. Dispositif de dégivrage selon la revendication 1, **caractérisé en ce que** le profil du tube piccolo (43) est déterminé en fonction de la forme de la lèvre avant (36) et/ou de la cloison de limitation (37) de façon à optimiser l'efficacité du dégivrage.

3. Dispositif selon l'une quelconque des revendications précédentes, **caractérisé en ce que** le tube piccolo (43) est alimenté en air chaud de dégivrage par au moins un conduit d'air chaud (44) connecté à travers une ouverture (46) de la cloison de limitation (37) au générateur d'air chaud de dégivrage.

4. Dispositif selon la revendication 1, **caractérisé en ce que** le générateur d'air chaud de dégivrage est disposé dans une zone de la nacelle en arrière d'une cloison intermédiaire (38) en arrière de la cloison de limitation (37) sur laquelle est intégré le tube piccolo (43) et **en ce que** le conduit (40) traverse des ouvertures (46, 42) de ladite cloison de limitation (37) et de ladite cloison intermédiaire (38).

5. Dispositif selon l'une des revendications précédentes, **caractérisé en ce que** les canaux d'air chaud (71 ; 75, 76 ; 100-103) pratiqués dans la structure alvéolaire (44) sont réalisés sur une partie au moins de la hauteur des alvéoles et débouchent sur un collecteur (50 ; 86) disposé du côté de la peau inférieure (45) de la lèvre avant (36) et à l'arrière de la structure alvéolaire (43) et qui est connecté par au moins un tube de sortie (51 ; 87) débouchant sur une ouverture de la face supérieure de la lèvre avant et **en ce que** les canaux sont disposés dans des zones de la structure alvéolaire qui ne sont pas munies de perforations acoustiques, mais dégagent des points d'injection (80) d'air de dégivrage sur la peau supérieure de la structure alvéolaire (43).

6. Procédé de fabrication d'un dispositif de dégivrage pour section d'entrée d'air d'une nacelle de moteur d'aéronef, consistant au moins à former une lèvre avant annulaire (36) dotée de perforations acoustiques, à disposer une structure alvéolaire de réduction de bruit (44) dotée de canaux de circulation de l'air chaud de dégivrage débouchant dans un collecteur d'air chaud (50 ; 87), à former un tube piccolo annulaire (43), percé de perforations de diffusion de l'air chaud de dégivrage fourni par un conduit d'air chaud (40) provenant d'un générateur d'air chaud de dégivrage, le tube piccolo (43) présentant un profil adapté à la forme de la lèvre avant (36) et à la face supérieure de ladite structure alvéolaire (44), à fixer le tube piccolo (43) par son bord inférieur (57) à la face inférieure en regard de la lèvre avant (36), à former une cloison avant (37) pour fermer le volume intérieur de la lèvre avant (36) en partant du tube piccolo (43) et à la fixer d'une part par ses bords supérieur et inférieur par rivetage (58, 60) à la face en regard de la lèvre avant (36), et d'autre part aux bords adaptés (59, 60) en regard du tube piccolo (43).

7. Procédé de fabrication selon la revendication précédente, **caractérisé en ce qu'**il consiste à former les canaux de circulation d'air de dégivrage (71 ; 75 ; 100) et/ou le collecteur (50 ; 86) d'air chaud excédentaire dans lequel les canaux débouchent dans la structure alvéolaire (44) par usinage au moins partiel de groupes d'alvéoles (77) ou encore par collage partiel (106, 111) des feuilles (109, 110) empilées de réalisation des alvéoles de façon à, par expansion (112) de l'empilement de feuilles (109, 110), réaliser au moins un canal (100) de circulation d'air chaud de dégivrage de largeur déterminée et/ou le collecteur (86) d'air chaud excédentaire.

8. Nacelle de moteur d'aéronef **caractérisée en ce qu'**elle comporte un dispositif de dégivrage pour sa section d'entrée d'air fabriqué selon le procédé des revendications 6 ou 7, et selon l'une des revendications 1 à 5.

## Patentansprüche

1. Enteisungsvorrichtung für Gondellufteinlassstruktur eines Luftfahrzeugtriebwerks, in der Art einen Heißluftgenerator umfassend, der über zumindest eine Leitung mit einem Piccolo Tube verbunden ist, das in Bezug auf das Innenvolumen einer Frontlippe der Gondel angeordnet ist, wobei die Frontlippe mit Perforationen für den Heißluftstrom zur Enteisung versehen ist, sowie zumindest eine Wabenstruktur zur Geräuschminderung, die auf zumindest einem Teil der perforierten Hülle der Einlasslippe angeordnet ist, wobei die Wabenstruktur dergestalt ist, dass sie eine Vielzahl von Kanälen zum Zirkulieren der Heißluft aufweist, die durch das Piccolo Tube verteilt wird, wobei das Piccolo Tube (43) ein ringförmiges Profil aufweist, das in eine Begrenzungswand (37) des Innenvolumens der Frontlippe (36) integriert ist, wobei es mit einer Vielzahl von Perforationen zur Durchführung der Verteilung der Heißluft versehen ist, die durch eine oder mehrere Leitungen (40) aus dem Heißluftgenerator durch die besagte Begrenzungswand (37) hindurch herangeführt wird, wobei Wabenstruktur (44) zumindest teilweise zwischen einem Teil des Piccolo Tubes (43) und einem Teil (45) gegenüber der Innenseite der Hülle zur Begrenzung der Frontlippe (36) angeordnet ist, **dadurch gekennzeichnet, dass** ein Teil des Piccolo Tubes (43) als Hülle zur Begrenzung der Wabenstruktur zur Geräuschminderung (44) dient.

2. Enteisungsvorrichtung nach Anspruch 1, **dadurch gekennzeichnet, dass** das Profil des Piccolo Tubes (43) in Abhängigkeit von der Form der Frontlippe (36) und/oder der Begrenzungswand (37) bestimmt wird, um die Wirksamkeit der Enteisung zu optimieren.

3. Vorrichtung nach einem der vorhergehenden Ansprüche, **dadurch gekennzeichnet, dass** das Piccolo Tube (43) durch zumindest eine Heißluftleitung (44) mit Heißluft zur Enteisung versorgt wird, die durch eine Öffnung (46) der Begrenzungswand (37) mit dem Heißluftgenerator zur Enteisung verbunden ist.

4. Vorrichtung nach Anspruch 1, **dadurch gekennzeichnet, dass** der Heißluftgenerator zur Enteisung in einer Zone der Gondel hinter einer Zwischenwand (38), hinter der Begrenzungswand (37) angeordnet ist, an der das Piccolo Tube (43) integriert ist, und dadurch, dass die Leitung (40) durch Öffnungen (46, 42) der besagten Begrenzungswand (37) und der besagten Zwischenwand (38) führt.

5. Vorrichtung nach einem der vorhergehenden Ansprüche, **dadurch gekennzeichnet, dass** die Heißluftkanäle (71; 75, 76; 100-103), die in der Wabenstruktur (44) eingearbeitet sind, zumindest auf einem Teil der Höhe der Waben ausgeführt sind, und in eine Sammelleitung (50; 86) münden, die auf Seiten der Innenhülle (45) der Frontlippe (36) und hinten an der Wabenstruktur (43) angeordnet ist, und die über zumindest eine Ausgangsröhre (51; 87), die in eine Öffnung der Oberseite der Frontlippe mündet, angeschlossen ist, und dadurch, dass die Kanäle in Zonen der Wabenstruktur angeordnet sind, die mit keinen akustischen Perforationen versehen sind, jedoch Injektionsstellen (80) für Enteisungsluft auf der oberen Hülle der Wabenstruktur (43) freigeben.

6. Verfahren zur Herstellung einer Enteisungsvorrichtung für Gondellufteinlassstruktur eines Luftfahrzeugtriebwerks, das zumindest darin besteht, eine ringförmige Frontlippe (36) zu bilden, die mit akustischen Perforationen versehen ist, eine Wabenstruktur zur Geräuschminderung (44) anzubringen die mit Zirkulationskanälen für Heißluft zur Enteisung versehen ist, die in eine Sammelleitung (50; 87) für Heißluft münden, ein ringförmiges Piccolo Tube (43) zu bilden, das mit Perforationen zur Verteilung der Heißluft zur Enteisung versehen ist, die durch eine Heißluftleitung (40) aus einem Heißluftgenerator zur Enteisung kommt, wobei das Piccolo Tube (43) ein Profil aufweist, das der Form der Frontlippe (36) und der Oberseite der besagten Wabenstruktur (44) angepasst ist, das Piccolo Tube (43) an seinem unteren Rand (57) an der Unterseite gegenüber der Frontlippe (36) zu befestigen, eine vordere Wand (37) zu bilden, um das Innenvolumen der Frontlippe (36) ausgehend vom Piccolo Tube (43) zu verschließen und sie einerseits an ihrem oberen und unteren Rand durch Vernieten (58, 60) an der Seite gegenüber der Frontlippe (36), und andererseits an geeigneten Rändern (59, 60) gegenüber dem Piccolo Tube (43) zu befestigen.

7. Verfahren zur Herstellung nach dem vorhergehenden Anspruch, **dadurch gekennzeichnet, dass** es darin besteht, die Heißluftkanäle zur Enteisung (71; 75; 100) und/oder die Sammelleitung (50; 86) für überschüssige Heißluft, in welche die Kanäle in die Wabenstruktur (44) münden, durch zumindest teilweises Bearbeiten von Wabengruppen (77) oder aber durch das teilweise Verkleben (106, 111) der gestapelten Blätter (109, 110) zur Herstellung der Waben zu bilden, um durch Expansion (112) des Blätterstapels (109, 110) zumindest einen Kanal (100) zum Zirkulieren von Heißluft zur Enteisung in einer bestimmten Breite und/oder die Sammelleitung (86) für die überschüssige Heißluft herzustellen.

8. Triebwerksgondel eines Luftfahrzeugs, **dadurch gekennzeichnet, dass** sie eine Enteisungsvorrichtung für ihre Lufteinlassstruktur umfasst, die gemäß dem Verfahren der Ansprüche 6 oder 7 und nach einem der Ansprüche 1 bis 5 hergestellt wird.

## Claims

1. A de-icing device for an aircraft engine nacelle air inlet, of the type including a hot air generator connected by at least one conduit to a piccolo tube disposed in relation to the inner volume of a front lip of the nacelle, the front lip being provided with perforations for the flow of the de-icing hot air and at least one honeycomb noise reduction structure disposed on at least one portion of the perforated skin of the inlet lip, the honeycomb structure being of the type having a plurality of circulation channels of the hot air diffused by the piccolo tube, the piccolo tube (43) having an annular profile integral with a limiting partition (37) of the inner volume of the front lip (36), being provided with a plurality of perforations for producing the diffusion of the hot air supplied through one or more conduit(s) (40) from the hot air generator through said limiting partition (37), the honeycomb structure (44) being at least partially disposed between a portion of the piccolo tube (43) and a portion (45) facing the inner face of the limiting skin of the front lip (36) **characterized in that** the portion of the piccolo tube (43) serves as limiting skin of the honeycomb noise reduction structure (44).

2. The de-icing device according to claim 1, **characterized in that** the profile of the piccolo tube (43) is determined depending on the shape of the front lip (36) and/or of the limiting partition (37) so as to optimize the de-icing efficiency.

3. The device according to any one of the preceding claims, **characterized in that** the piccolo tube (43) is supplied with de-icing hot air by at least one hot air conduit (44) connected through an opening (46) of the limiting partition (37) to the de-icing hot air generator.

4. The device according to claim 1, **characterized in that** the de-icing hot air generator is disposed in an area of the nacelle rearwards of an intermediate partition (38) rearwards of the limiting partition (37) on which the piccolo tube (43) is integrated, and **in that** the conduit (40) crosses openings (46, 42) of said limiting partition (37) and of said intermediate partition (38).

5. The device according to any of the preceding claims, **characterized in that** the hot air channels (71, 75, 76; 100-103) made in the honeycomb structure (44) are produced over at least one portion of the height of the honeycomb cells and leading into a collector (50, 86) disposed on the side of the lower skin (45) of the front lip (36) and rearwards of the honeycomb structure (43) and which is connected by at least one outlet tube (51; 87) leading into an opening of the upper face of the front lip, and **in that** the channels are disposed in areas of the honeycomb structure which are not provided with acoustic perforations, but release injection points (80) of de-icing air on the upper skin of the honeycomb structure (43).

6. A method for manufacturing a de-icing device for an air inlet section of an aircraft engine nacelle, consisting at least in forming an annular front lip (36) provided with acoustic perforations, disposing a honeycomb noise reduction structure (44) provided with circulation channels of the de-icing hot air leading into a hot air collector (50; 87), forming an annular piccolo tube (43), pierced with perforations for diffusing the de-icing hot air provided by a hot air conduit (40) coming from a de-icing hot air generator, the piccolo tube (43) having a profile adapted to the shape of the front lip (36) and to the upper face of said honeycomb structure (44), fastening the piccolo tube (43) by its lower edge (57) to the lower face opposite to the front lip (36), forming a front partition (37) to close the inner volume of the front lip (36) starting from the piccolo tube (43) and fastening it on the one hand by its upper and lower edges by riveting (58, 60) to the face opposite to the front lip (36), and on the other hand to the adapted edges (59, 60) opposite to the piccolo tube (43).

7. The manufacturing method according to the preceding claim, **characterized in that** it consists in forming the de-icing air circulation channels (71; 75; 100) and/or the excess hot air collector (50; 86) in which the channels lead into the honeycomb structure (44) by at least partial machining of groups of honeycomb cells (77) or even by partial bonding (106, 111) of the stacked sheets (109, 110) for producing the honeycomb cells so as, by expansion (112) of the stack of sheets (109, 110), to produce at least one de-icing hot air circulation channel (100) of a determined width and/or the excess hot air collector (86).

8. A nacelle for an aircraft engine, **characterized in that** it includes a de-icing device for its air inlet section manufactured according to the method of claims 6 or 7, and according to any of claims 1 to 5.
